# FASCICULE DE BREVET EUROPEEN

(11) **EP 3 496 062 B1**
(45) Date de publication et mention de la délivrance du brevet: **19.07.2023**
(21) Numéro de dépôt: 18211018.9
(22) Date de dépôt: 07.12.2018
(51) Int. Cl.: G08B 25/00, B61L 15/00, G08B 25/01, G08B 25/08, H04B 1/3827, H04N 21/214

(54) **SYSTÈME D'ALERTE POUR PASSAGER D'UN VÉHICULE FERROVIAIRE**
ALARMSYSTEM FÜR PASSAGIER EINES SCHIENENFAHRZEUGS
WARNING SYSTEM FOR PASSENGER OF A RAIL VEHICLE

(30) Priorité: 08.12.2017 FR 1761850
(43) Date de publication de la demande: 12.06.2019
(73) Titulaire: SpeedInnov, 75008 Paris (FR)
(72) Inventeur: OBERNESSER, Philippe, 75015 Paris (FR)
(74) Mandataire: Lavoix

(56) Documents cités:
- EP-A1- 2 827 616
- EP-A2- 1 404 063
- WO-A1-2006/083193
- WO-A1-2012/108781
- CN-A- 104 986 189
- JP-A- H11 355 856
- JP-A- 2002 157 669
- US-A1- 2017 186 307

## Description

La présente invention concerne un procédé et un système d'alerte destinés à un passager d'un véhicule ferroviaire, équipé d'un terminal mobile tel qu'un téléphone cellulaire, un ordinateur portable ou un appareil électronique embarqué.

Un tel système est destiné à être mis en oeuvre dans au moins une voiture du véhicule ferroviaire, pour permettre à un passager de ladite voiture de signaler une situation de détresse à un agent du véhicule ferroviaire.

Les véhicules ferroviaires sont habituellement équipés de système d'alerte permettant, lorsqu'ils sont actionnés, de déclencher un signal sonore et lumineux. Classiquement, les systèmes existants prennent la forme de poignées d'urgences disposées dans les voitures du véhicule ferroviaire de façon à être accessibles et facilement identifiables.

Divers systèmes d'alerte sont également décrits dans EP 2 827 616, CN 104 986 189A, JP H11 355856A, JP 2002 157669A, WO 2012/108781 ou WO 2006/083193.

Toutefois, les systèmes d'alarme existants n'offrent pas une totale satisfaction.

En effet, dans certains cas particuliers, il peut être souhaitable que le passager puisse actionner le système d'alerte discrètement. Dans d'autres cas, il est possible que le passager n'ait pas accès à la poignée d'urgence.

Le but de la présente invention est donc de proposer un système d'alarme peu coûteux et discret, à la disposition du grand public pour communiquer à distance un message d'alerte à partir de la détection d'un événement indésirable.

A cet effet, l'invention a notamment pour objet un système d'alerte selon la revendication 1.

Le système d'alarme revendiqué met à profit un réseau sans-fil pour acheminer des alertes. Il peut être aisément mis en oeuvre par simple téléchargement d'une application logicielle sur un terminal mobile et ne requiert donc pas d'équipements spécifiques coûteux. L'utilisation de terminal mobile permet, entre autre, à un passager d'alerter les agents du véhicule ferroviaire sans avoir à se déplacer.

Le système selon l'invention peut comporter l'une ou plusieurs des caractéristiques suivantes, prises isolément ou suivant toute combinaison techniquement possible.
- Le signal d'alerte est sous format vidéo.
- La liaison sans fil opère sous la norme IEEE 802.11 (Wifi), Bluetooth, 3G ou 4G.

L'invention a également pour objet un procédé d'alerte au moyen d'un système d'alerte tel que défini précédemment, caractérisé en ce qu'il comprend :
- l'établissement d'une connexion sans fil entre le terminal mobile et le réseau central de communication,
- la génération d'un signal d'alerte au moyen de l'application logicielle stockée dans le terminal mobile ;
- la transmission du signal d'alerte généré par l'application logicielle vers le module de traitement d'alerte,
- le traitement de l'alerte par le module de traitement d'alerte, et le signalement de la réception d'un signal d'alerte à au moins un agent du véhicule ferroviaire.

L'invention sera mieux comprise à la lecture de la description qui va suivre, donnée uniquement à titre d'exemple et faite en se référant aux figures annexées, parmi lesquelles :
- la figure 1 est une vue schématique d'un véhicule ferroviaire équipé d'un système d'alerte ;
- la figure 2 est une vue schématique d'un système d'alerte selon un mode de réalisation de l'invention ; et
- la figure 3 est un organigramme d'un procédé d'alerte mise en oeuvre par le système d'alerte de la figure 1.

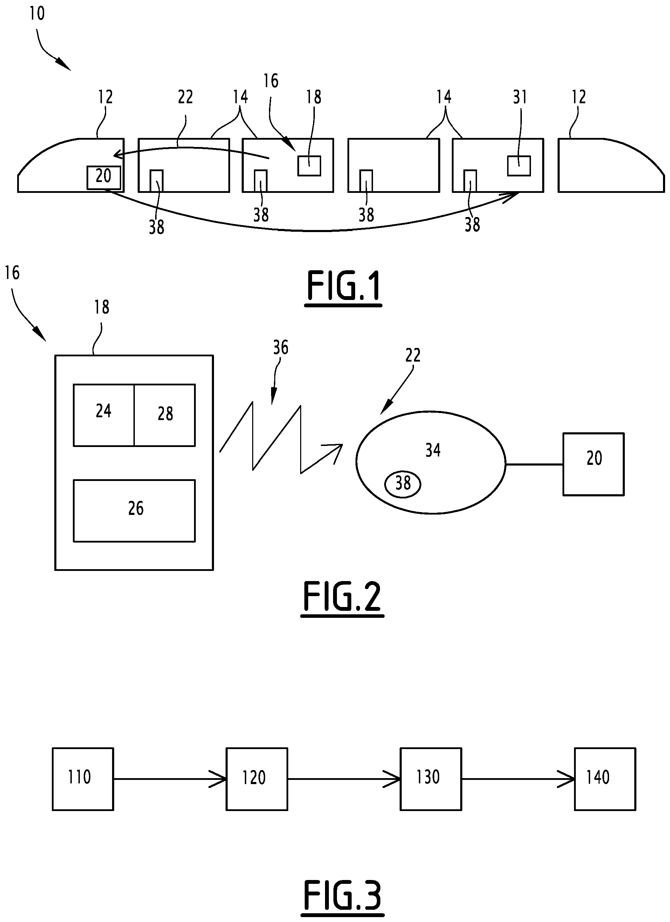

On a représenté, sur la figure 1, un véhicule ferroviaire 10 comprenant au moins une voiture d'extrémité 12, par exemples deux voitures d'extrémité 12, une pluralité de voitures de transport de passagers 14 et un système d'alerte 16 selon un exemple de mode de réalisation de l'invention.

Le système d'alerte 16 est destiné à transmettre une alerte d'un passager d'une voiture 12, 14 à destination d'au moins un agent d'équipage du véhicule ferroviaire 10.

Le système d'alerte 16 est configuré pour mettre en oeuvre un procédé d'alerte, qui sera décrit plus en détail par la suite.

Le système d'alerte 16 comprend un terminal mobile 18, un module de traitement d'alerte 20 et une liaison de transmission de données 22.

Le terminal mobile 18 est avantageusement facilement transportable.

Il est par exemple formé par un téléphone, de préférence un ordiphone (ou « *smartphone* » en anglais), un ordinateur portable ou un appareil électronique embarqué.

Comme cela est représenté sur la figure 2, le terminal mobile 18 comporte une mémoire 24 et une interface utilisateur 26.

La mémoire 24 est propre à stocker une application logicielle 28 configurée pour générer un signal d'alerte.

Selon les fonctionnalités du terminal mobile 18, le signal d'alerte comprend au moins un texte, et/ou au moins une image et/ou au moins une vidéo.

Avantageusement, le signal d'alerte porte également un numéro d'identification du terminal mobile 18. Dans le cas où le terminal mobile 18 est formé par un téléphone mobile, il s'agit par exemple d'un identifiant MIN (de l'anglais, « *Mobile identification number* »).

L'interface utilisateur 26 est destinée à être activée par le passager pour faire apparaître une fenêtre comprenant une icône d'exécution de l'application logicielle 28.

Avantageusement, l'interface utilisateur 26 est formée par un écran tactile. Ainsi l'application logicielle de commande peut être mise en oeuvre manuellement par pression sur l'icône affichée sur l'interface utilisateur 26.

Par ailleurs, le terminal mobile 18 est apte à se connecter à un système de connexion sans fil, par exemple opérant sous la norme IEEE 802.11 (Wifi), Bluetooth, 3G ou 4G.

Le module de traitement d'alerte 20 est destiné à signaler la réception du signal d'alerte à l'au moins un agent du véhicule ferroviaire 10.

Pour ce faire, le module de traitement d'alerte 20 est, par exemple, en mesure d'émettre une alarme sonore ou lumineuse.

Le module de traitement d'alerte 20 est configuré pour envoyer des messages d'alertes à distance. Par exemple, le module de traitement d'alerte 20 est configuré pour rediriger le signal d'alerte vers un ou plusieurs dispositifs électroniques 31, par exemple mobiles et portés par un ou plusieurs agents du véhicule ferroviaire 10. En variante, le module de traitement d'alerte 20 génère un second signal d'alerte à partir du signal généré par l'application 28.

Avantageusement, le module de traitement d'alerte 20 est en outre configuré pour envoyer des informations de maintenance et/ou des requêtes aux agents du véhicule ferroviaire, par exemple, pour signaler un siège cassé ou pour demander un changement de la température de l'air.

En référence à la figure 1, le module de traitement d'alerte 20 est par exemple disposé dans la voiture de tête 12, ou dans une voiture 14 comportant un local de service.

De préférence, le module de traitement d'alerte 20 est configuré pour identifier, à partir du signal d'alerte, une information de localisation du terminal mobile 18 émetteur du signal d'alerte. Le module de traitement d'alerte 20 communique ensuite l'information de localisation du terminal mobile 18 à au moins un agent du véhicule ferroviaire 10.

En particulier, le module de traitement d'alerte 20 est configuré pour déterminer, à partir du signal d'alerte, la voiture 14 où se situe le terminal mobile 18 émetteur du signal d'alerte.

La liaison de transmission de données 22 est configurée pour transmettre le signal d'alerte émis par le terminal mobile 18 vers le module de traitement d'alerte 20.

Pour ce faire, la liaison de transmission de données 22 comprend un réseau central de communication 34 et une connexion sans fil 36 entre le terminal mobile 18 et le réseau central de communication 34.

Le réseau central de communication 34 s'étend le long du véhicule ferroviaire 10. Il est par exemple formé en partie par un réseau filaire local opérant sous la norme IEEE 802.3 (réseau « Ethernet »).

Le réseau central de communication 34 est connecté au module de traitement d'alerte 20.

Le réseau de communication 34 comporte au moins une borne de connexion sans fil 38, opérant par exemple sous la norme IEEE 802.11 (Wifi), Bluetooth, 3G ou 4G.

De préférence, le réseau de communication 34 comporte au moins une telle borne de connexion sans fil 38, opérant par exemple sous la norme IEEE 802.11 (Wifi) , Bluetooth, 3G ou 4G dans chaque voiture 14 et de manière optionnelle dans chaque voiture 12, notamment dans le cas où la voiture 12 comporte une salle passagers.

Le fonctionnement du système d'alerte 16 sera désormais expliqué en référence au mode de réalisation de la figure 2.

Le procédé d'alerte comprend plusieurs étapes dont l'organigramme est illustré sur la figure 3.

Lors d'une première étape 110, le terminal mobile 18 établit une connexion sans fil 36 avec la borne de connexion sans fil 38 du réseau central de communication 34.

Le procédé comporte ensuite une étape 120, au cours de laquelle l'application logicielle 28, préalablement téléchargée et stockée dans la mémoire 24, est activée par un passager à partir de l'interface utilisateur 26.

En réponse à cette activation, le terminal mobile 18 génère un signal d'alerte. Le signal d'alerte intègre la donnée d'identification de localisation.

Le procédé comporte ensuite une étape de transmission 130, au cours de laquelle le signal d'alerte est transmis par le terminal mobile 18 au module de traitement d'alerte 20 au moyen de la liaison de transmission de données 22.

Le procédé comporte ensuite une étape de traitement 140, au cours de laquelle la réception du signal d'alerte est signalée à au moins un agent du véhicule ferroviaire et le signal d'alerte est traité par le module de traitement 20.

L'étape de traitement 140 comprend une sous-étape de localisation du terminal mobile 18.

Afin d'identifier, à partir du signal d'alerte, une information de localisation du terminal mobile 18, l'activation de l'application logicielle 28 fait apparaitre une fenêtre d'acquisition. Cette fenêtre permet au passager d'indiquer une information de localisation.

En outre, le module de traitement d'alerte 20 est configuré pour retracer le parcours du signal d'alerte au sein du réseau central de communication 34.

En outre, une donnée d'identification de localisation associée à la borne de connexion sans fil 38 est transmise au terminal mobile 18 lors de l'établissement de la connexion sans fil 36 à l'étape 110. Cette donnée d'identification de localisation est stockée dans la mémoire 24 et incorporée par l'application logicielle 28 dans le signal d'alerte. Le module de traitement d'alerte 20 est alors configuré pour identifier une information de localisation à partir de la donnée d'identification de localisation.

Il apparait clairement que la présente invention présente un certain nombre d'avantages.

Un terminal mobile 18 tel qu'un téléphone portable, permet de fournir plusieurs fonctions que n'offrent pas les systèmes existants et qui permettent d'augmenter l'interactivité avec les agents du véhicule ferroviaire 10.

Il est à noter que l'alerte n'est diffusée qu'aux seuls agents du véhicule ferroviaire 10. Il revient alors à ces agents d'actionner ou non le système d'alarme classique afin d'avertir l'ensemble des passagers alors que dans le cas des systèmes d'alertes existants, les tirages d'alarme provoquent immédiatement l'arrêt du train ce qui engendre un important retard sur le réseau ferroviaire.

## Revendications

1. Système d'alerte (16) destiné à être actionné par un passager d'un véhicule ferroviaire (10), comprenant :
- au moins un terminal mobile (18) comportant une interface utilisateur (26) et une mémoire (24) stockant au moins une application logicielle (28) propre à générer un signal d'alerte ;
- un module de traitement d'alerte (20), disposé dans une voiture du véhicule ferroviaire, configuré pour signaler la réception du signal d'alerte à au moins un agent du véhicule ferroviaire ; et
- une liaison de transmission de données (22) entre le terminal mobile (18) et le module de traitement d'alerte (20), configurée pour transmettre le signal d'alerte généré par l'application logicielle (28) vers le module de traitement d'alerte (20), la liaison de transmission de données (22) comportant un réseau central de communication (34) et une connexion sans fil (36) entre le terminal mobile (18) et le réseau central de communication, le réseau central de communication (34) étant un réseau filaire local comportant au moins une borne de connexion sans fil (38),
**caractérisé en ce que** :
- le système d'alerte comporte au moins un dispositif électronique mobile, par exemple associé à un agent, le module de traitement d'alerte (20) étant configuré pour rediriger le signal d'alerte vers le dispositif électronique mobile, et, afin d'identifier, à partir du signal d'alerte, une information de localisation du terminal mobile (18), le système d'alerte (16) comporte les caractéristiques suivantes:
- le terminal mobile (18) est configuré pour que le signal d'alerte intègre une donnée d'identification de localisation associée à la borne de connexion sans fil (38), la donnée d'identification étant transmise au terminal mobile (18) lors de l'établissement de la connexion sans fil (36), la donnée d'identification de localisation étant stockée dans la mémoire (24) et incorporée par l'application logicielle (28) dans le signal d'alerte,
- le terminal mobile (18) est configuré pour que l'activation de l'application logicielle (28) fasse apparaitre une fenêtre d'acquisition, permettant au passager d'indiquer une information de localisation,
- le module de traitement d'alerte (20) est configuré pour identifier une information de localisation du terminal mobile (18) à partir du signal d'alerte, et
- le module de traitement d'alerte (20) est configuré pour retracer le parcours du signal d'alerte au sein du réseau central de communication (34).

2. Système d'alerte (16) selon l'une quelconques des revendications précédentes, dans lequel le signal d'alerte est sous format vidéo.

3. Système d'alerte (16) selon l'une quelconque des revendications précédentes, dans lequel la liaison sans fil (36) opère sous la norme IEEE 802.11 (Wifi), Bluetooth, 3G ou 4G.

4. Procédé d'alerte au moyen d'un système d'alerte (16) selon l'une quelconque des revendications précédentes, **caractérisé en ce qu'**il comprend :
- l'établissement d'une connexion sans fil entre le terminal mobile (18) et le réseau central de communication (34),
- la génération d'un signal d'alerte au moyen de l'application logicielle (28) stockée dans le terminal mobile (18) ;
- la transmission du signal d'alerte généré par l'application logicielle (28) vers le module de traitement d'alerte (20),
- le traitement de l'alerte par le module de traitement d'alerte (20), qui comprend la localisation du terminal mobile (18), et le signalement de la réception d'un signal d'alerte à au moins un agent du véhicule ferroviaire.

## Patentansprüche

1. Alarmsystem (16), das dazu bestimmt ist, von einem Fahrgast eines Schienenfahrzeugs (10) betätigt zu werden, umfassend:
- mindestens ein mobiles Endgerät (18), umfassend eine Benutzeroberfläche (26) und einen Speicher (24), der mindestens eine Softwareanwendung (28) speichert, die geeignet ist, um ein Alarmsignal zu erzeugen;
- ein Alarmverarbeitungsmodul (20), das in einem Wagen des Schienenfahrzeugs angeordnet ist und konfiguriert ist, um den Empfang des Alarmsignals an mindestens einen Bediensteten des Schienenfahrzeugs zu melden; und
- eine Datenübertragungsverbindung (22) zwischen dem mobilen Endgerät (18) und dem Alarmverarbeitungsmodul (20), die konfiguriert ist, um das von der Softwareanwendung (28) erzeugte Alarmsignal an das Alarmverarbeitungsmodul (20) zu übertragen, die Datenübertragungsverbindung (22) umfassend ein zentrales Kommunikationsnetzwerk (34) und eine drahtlose Verbindung (36) zwischen dem mobilen Endgerät (18) und dem zentralen Kommunikationsnetzwerk, wobei das zentrale Kommunikationsnetzwerk (34) ein lokales drahtgebundenes Netzwerk ist, das mindestens einen drahtlosen Verbindungsanschluss (38) umfasst,
**dadurch gekennzeichnet, dass**:
- das Alarmsystem mindestens eine mobile elektronische Vorrichtung umfasst, die beispielsweise mit einem Bediensteten assoziiert ist, wobei das Alarmverarbeitungsmodul (20) konfiguriert ist, um das Alarmsignal an die mobile elektronische Vorrichtung umzuleiten, um anhand des Alarmsignals eine Standortinformation des mobilen Endgeräts (18) zu identifizieren, wobei das Alarmsystem (16) die folgenden Merkmale umfasst:
- das mobile Endgerät (18) konfiguriert ist, damit das Alarmsignal Standortidentifizierungsdaten integriert, die mit dem drahtlosen Verbindungsanschluss (38) assoziiert sind, wobei die Identifizierungsdaten bei Herstellung der drahtlosen Verbindung (36) an das mobile Endgerät (18) übertragen werden, wobei die Standortidentifizierungsdaten in dem Speicher (24) gespeichert und von der Softwareanwendung (28) in das Alarmsignal integriert werden,
- das mobile Endgerät (18) konfiguriert ist, damit bei Aktivierung der Softwareanwendung (28) ein Erfassungsfenster erscheint, das es dem Passagier ermöglicht, Standortinformationen anzugeben,
- das Alarmverarbeitungsmodul (20) konfiguriert ist, um anhand des Alarmsignals Standortinformationen des mobilen Endgeräts (18) zu identifizieren, und
- das Alarmverarbeitungsmodul (20) konfiguriert ist, um den Weg des Alarmsignals innerhalb des zentralen Kommunikationsnetzwerks (34) nachzuvollziehen.

2. Alarmsystem (16) nach einem der vorherigen Ansprüche, wobei das Alarmsignal in Videoformat ist.

3. Alarmsystem (16) nach einem der vorherigen Ansprüche, wobei die drahtlose Verbindung (36) unter dem Standard IEEE 802.11 (Wifi), Bluetooth, 3G oder 4G betrieben wird.

4. Alarmverfahren mittels eines Alarmsystems (16) nach einem der vorherigen Ansprüche, **dadurch gekennzeichnet, dass** es Folgendes umfasst:
- Herstellen einer drahtlosen Verbindung zwischen dem mobilen Endgerät (18) und dem zentralen Kommunikationsnetzwerk (34),
- Erzeugen eines Alarmsignals mittels der in dem mobilen Endgerät (18) gespeicherten Softwareanwendung (28);
- Übertragen des von der Softwareanwendung (28) erzeugten Alarmsignals an das Alarmverarbeitungsmodul (20),
- Verarbeiten des Alarms durch das Alarmverarbeitungsmodul (20), die den Standort des mobilen Endgeräts (18) und die Meldung des Empfangs eines Alarmsignals an mindestens einen Bediensteten des Schienenfahrzeugs umfasst.

## Claims

1. Warning system (16) for actuation by a passenger of a railway vehicle (10), comprising:
- at least one mobile terminal (18) comprising a user interface (26) and a memory (24) storing at least one software application (28) suitable for generating an warning signal;
- a warning processing module (20), located in a coach of the rail vehicle, configured to signal the receipt of the warning signal to at least one agent of the rail vehicle; and
- a data transmission link (22) between the mobile terminal (18) and the warning processing module (20), configured to transmit the warning signal generated by the software application (28) to the warning processing module (20), the data transmission link (22) comprising a central communication network (34) and a wireless connection (36) between the mobile terminal (18) and the central communication network, the central communication network (34) being a local wire network comprising at least one wireless connection terminal (38),
**characterised in that**:
- the warning system comprises at least one mobile electronic device, for example associated with an agent, the warning processing module (20) being configured to redirect the warning signal to the mobile electronic device F, and, in order to identify, from the warning signal, location information of the mobile terminal (18), the warning system (16) comprises the following features:
- the mobile terminal (18) is configured so that the warning signal incorporates location identification data associated with the wireless connection terminal (38), the identification data being transmitted to the mobile terminal (18) when the wireless connection (36) is established, the location identification data being stored in the memory (24) and incorporated by the software application (28) in the warning signal,
- the mobile terminal (18) is configured so that activation of the software application (28) brings up an acquisition window, allowing the passenger to indicate location information,
- the warning processing module (20) is configured to identify location information of the mobile terminal (18) from the warning signal, and
- the warning processing module (20) is configured to trace the path of the warning signal through the central communications network (34).

2. Warning system (16) according to any of the preceding claims, wherein the warning signal is in video format.

3. Warning system (16) according to any of the preceding claims, wherein the wireless link (36) operates under the IEEE 802.11 (Wifi), Bluetooth, 3G or 4G standard.

4. A method of warning by means of an warning system (16) according to any of the preceding claims, **characterised in that** it comprises:
- establishing a wireless connection between the mobile terminal (18) and the central communications network (34),
- generating an warning signal using the software application (28) stored in the mobile terminal (18);
- transmitting the warning signal generated by the software application (28) to the warning processing module (20),
- processing the warning by the warning processing module (20), which includes locating the mobile terminal (18), and reporting the receipt of an warning signal to at least one agent of the rail vehicle.
